# EUROPÄISCHE PATENTSCHRIFT

(11) **EP 2 700 726 B1**
(45) Veröffentlichungstag und Bekanntmachung des Hinweises auf die Patenterteilung: **19.08.2015**
(21) Anmeldenummer: 13180954.3
(22) Anmeldetag: 20.08.2013
(51) Int. Cl.: C22B 7/00, C22B 11/02, H01M 8/00

(54) **Vorrichtung und Verfahren zur thermischen Behandlung Fluor- und Edelmetallhaltiger Produkte**
Device and method for the thermal treatment of products containing fluorine and precious metals
Dispositif et procédé de traitement thermique de produits contenant du fluor et du métal précieux

(30) Priorität: 21.08.2012 DE 102012016420
(43) Veröffentlichungstag der Anmeldung: 26.02.2014
(73) Patentinhaber: Heraeus Deutschland GmbH & Co. KG, 63450 Hanau (DE)
(72) Erfinder: Romero, Jose Manuel, 63457 Hanau (DE); Meyer, Horst, 63674 Altenstadt (DE); Voss, Steffen, 63694 Limeshain (DE)
(74) Vertreter: Brand, Normen

(56) Entgegenhaltungen:
- EP-A1- 1 478 042
- EP-A2- 0 515 792
- DE-A1-102004 041 997
- DE-A1-102005 021 656

## Beschreibung

Die vorliegende Erfindung betrifft eine Vorrichtung sowie ein Verfahren zur thermischen Behandlung edelmetallhaltiger Produkte, die neben Edelmetallen auch Fluor enthalten.

Zur Rückgewinnung von Edelmetallen aus edelmetallhaltigen Produkten, wie beispielsweise Katalysatoren oder Brennstoffzellen, haben sich unterschiedliche Verfahren durchgesetzt. Beim hydrometallurgischen Verfahren wird bei Katalysatoren die edelmetallhaltige Schicht mit starken Säuren oder Laugen vom keramischen Träger gelöst. Anschließend werden die Edelmetalle beispielsweise durch Fällungsreaktion aus der Lösung abgetrennt.

Bei pyrometallurgischen Verfahren erfolgt die Abtrennung der Edelmetalle durch ein Schmelzen der edelmetallhaltigen Produkte in einem Hüttenprozess. Der keramische Anteil wird in einer Schlackenphase überführt und abgestochen, die Edelmetalle werden in ein Sammlermetall legiert, welches ebenfalls abgezogen und weiterverarbeitet wird.

Weiterhin bekannt ist die direkte Verbrennung edelmetallhaltiger Schlämme und Multielementabfall, wie beispielsweise in DE 31 34 733 C2 und WO 99/037823 beschrieben. Die erhaltene edelmetallhaltige Asche wird anschließend zur Rückgewinnung der Edelmetalle ausgelaugt.

Bei der thermischen Aufarbeitung haben sich solche edelmetallhaltige Produkte als problematisch erwiesen, welche neben Edelmetallen auch Fluor enthalten. Bei der Wärmebehandlung entsteht bei diesen Produkten Fluorwasserstoffgas HF. Dieses reagiert mit Wasser in der Luft zu Flusssäure.

Übliche Anlagen zur thermischen Aufarbeitung, insbesondere Veraschungsanlagen, umfassen eine Wärmebehandlungskammer und ein Abgasreinigungssystem. Die Wärmebehandlungskammer als Bestandteil eines Ofens ist mit einer Isolierauskleidung beispielsweise aus Schamottsteinen oder einer Stampfmasse versehen. Diese weisen unterschiedliche Zusammensetzungen auf. Alle Isolierauskleidungen weisen jedoch unter anderem Siliziumdioxid SiO₂ (Glas) und Kalziumoxid CaO auf. Diese Bestandteile werden bereits von geringen Mengen der gebildeten Flusssäure und vom Fluorwasserstoffgas angegriffen und aus der Isolierauskleidung herausgelöst, wodurch die Lebensdauer des Ofens und damit der Anlage herabgesetzt wird.

Ein weiteres durch Fluorwasserstoffgas bedingtes Problem stellt die Kondensation von Flusssäure im Bereich der stützenden Stahl-Außenmäntel dar. Diese stellen das formgebende und mechanisch tragende Gerüst der Bestandteile einer Veraschungsanlage dar. Fluorwasserstoffgas kann durch Porositäten der Isolierauskleidung diffundieren und im Bereich der Stahlmäntel mit Wasser aus der Luft zu Flusssäure reagieren. Kondensiert die Flusssäure auf den Stahlmänteln, so führt dies zu Korrosion derselben, was zu einer Instabilität der gesamten Anlage führen kann.

Ein Verfahren, in welchem die Entstehung von HF verhindert werden soll, offenbart EP 1 478 042 A1. In diesem Verfahren werden Bestandteile von Brennstoffelementen und Katalysatoren mit anorganischen Additiven gemischt. Im anschließenden thermischen Behandlungsprozess werden die Fluorwasserstoffe und andere Fluorverbindungen durch das Additiv absorbiert und chemisch gebunden. Hierfür wird das Additiv in bis zu 100 fachem Überschuss bezogen auf das entstehende Fluorwasserstoffgas zugegeben Es hat sich jedoch gezeigt, dass bei Materialien, welche bereits bei geringen Temperaturen Fluorwasserstoffgas freisetzen, die Absorption am Additiv nicht ausreichend oder nicht ausreichend schnell ist und daher Fluorwasserstoffgas entweicht. Zudem wird durch das Additiv ein Teil des Volumens des Verbrennungsraums belegt, so dass die Menge an verarbeitbarem Material geringer wird.

Die Aufgabe der vorliegenden Erfindung liegt daher in der Bereitstellung einer Anlage zur thermischen Aufarbeitung edelmetallhaltiger Produkte, die neben Edelmetallen auch Fluor aufweisen. Mit der erfindungsgemäßen Anlage sollen alle fluorhaltigen Produkte aufgearbeitet werden können, unabhängig von der Flüchtigkeit der enthaltenen Materialien.

Eine weitere Aufgabe der vorliegenden Erfindung besteht in der Bereitstellung eines Verfahrens zur Anreicherung von Edelmetallen aus fluorhaltigen Materialien.

In einer ersten Ausführungsform wird die der vorliegenden Erfindung zugrunde liegende Aufgabe gelöst durch eine Veraschungsanlage zur Anreicherung von Edelmetallen aus fluorhaltigen Materialien, umfassend eine Wärmebehandlungskammer (1) mit einer feuerfesten Isolierauskleidung im Inneren der Wärmebehandlungskammer (1) und ein Abgasreinigungssystem, wobei die feuerfeste Isolierauskleidung gegenüber Flusssäure resistent ist und das Abgasreinigungssystem wenigstens einen oder mehrere saure Wäscher (3, 4) und wenigstens einen basischen Wäscher (5) aufweist.
Ein weiterer Gegenstand der vorliegenden Erfindung ist eine Veraschungsanlage zur Anreicherung von Edelmetallen aus fluorhaltigen Materialien, umfassend eine Wärmebehandlungskammer (1) mit einer feuerfesten Isolierauskleidung im Inneren der Wärmebehandlungskammer (1) und ein Abgasreinigungssystem, wobei die feuerfeste Isolierauskleidung ein Gehalt an Aluminiumoxid von 85 Gew.-% oder mehr und das Abgasreinigungssystem wenigstens einen oder mehrere saure Wäscher (3, 4) und wenigstens einen basischen Wäscher (5) aufweist.

Bevorzugt weist das erfindungsgemäße Abgasreinigungssystem weiterhin wenigstens eine oder mehrere thermische Nachverbrennungskammern (2) auf. Bevorzugt umfasst das Abgasreinigungssystem eine Nachverbrennungskammer (2).

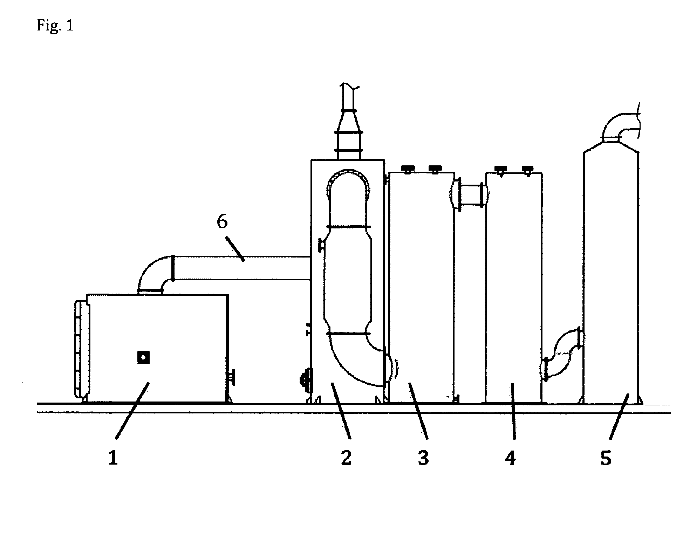

Fig. 1 zeigt schematisch eine erfindungsgemäße Veraschungsanlage. Gezeigt ist eine bevorzugte Ausführungsform, welche zwei saure Wäscher (3, 4) umfasst.

Die Wärmebehandlungskammer (1) ist Bestandteil eines Ofens, in welchen die zu verarbeitenden Materialien eingebracht werden. Hierfür umfasst die Wärmebehandlungskammer (1) eine Öffnung zum Einbringen der entsprechenden Materialien. Erfindungsgemäß kann die Wärmebehandlungskammer (1) mit Luftunter- bzw. mit Luftüberschuss betrieben werden. Die Wärmebehandlungskammer (1) kann im Inneren Vorrichtungen zur Verbrennung der fluor- und edelmetallhaltigen Materialien aufweisen. Hierbei handelt es sich beispielsweise um Roste zur Aufnahme von Wannen zur Verbrennung fester Materialien. Flüssige Materialien können entweder chargiert in Wannen oder kontinuierlich über entsprechende Dosiereinrichtungen in die Wärmebehandlungskammer (1) eingebracht und dort verbrannt werden.

Die Temperatur im Inneren der Wärmebehandlungskammer (1) beträgt üblicherweise etwa 800 °C. Die feuerfeste Isolierauskleidung ist dabei so ausgelegt, dass sie bei dieser Dauertemperatur stabil ist. Darüber hinaus weist sie eine Temperaturresistenz in Spitzen bis zu etwa 2000 °C auf. Erfindungsgemäß ist es möglich, die Wärmebehandlungskammer (1) direkt oder indirekt zu beheizen. Zur Befeuerung sind alle im Stand der Technik bekannten Arten möglich, beispielsweise Gas- und Ölbefeuerung oder Elektrobeheizung.

Erfindungsgemäß handelt es sich bei einem sauren Wäscher (3, 4) um eine Waschstufe, in der Abgase aus der Wärmebehandlungskammer (1) mit Wasser oder mit durch das auszuwaschende Fluorwasserstoffgas angesäuertem Wasser gewaschen wird. Bei einem basischen Wäscher (5) handelt es sich erfindungsgemäß um eine Waschstufe, in der die Abgase mit einem basischen Mittel gewaschen werden.

Werden in der erfindungsgemäßen Veraschungsanlage fluorhaltige Materialien in der Wärmebehandlungskammer (1) erwärmt, so entstehen Abgase, welche Fluorwasserstoffgas enthalten. Aufgrund der gegenüber Flusssäure resistenten Isolierauskleidung der Wärmebehandlungskammer (1), wird diese von den Abgasen nicht angegriffen. Im erfindungsgemäßen Abgasreinigungssystem wird das Abgas zunächst in einer thermischen Nachbehandlungskammer (2) thermisch aufbereitet und anschließend in den sauren und basischen Waschstufen (3, 4, 5) dann vollständig von Fluorwasserstoffgas oder bereits entstandener Flusssäure befreit, so dass die Abgase danach unschädlich sind und beispielsweise über einen Schornstein nach außen geleitet werden können.

Die erfindungsgemäße Veraschungsanlage kann weitere Reinigungsstufen oder Reinigungsmittel zur Reinigung von Abgasen vorsehen, um die Abgase beispielsweise von Ruß, Chlor- oder Nitrosegasen zu befreien. Entsprechende Reinigungsmittel oder Reinigungsstufen sind im Stand der Technik beschrieben.

Erfindungsgemäß ist die gegenüber Flusssäure resistente Isolierauskleidung sowohl gegenüber Fluorwasserstoffgas als auch gegenüber Flusssäure resistent.

In die Wärmebehandlungskammer (1) werden die edelmetall- und fluorhaltigen Materialien eingegeben. Die bei der Wärmebehandlung in der Wärmebehandlungskammer (1) entstehenden Abgase können zunächst in eine thermische Nachverbrennungskammer (2) geleitet. Bevorzugt ist auch diese im Inneren mit einer gegenüber Flusssäure resistenten feuerfesten Isolierauskleidung versehen. Weiterhin weist die Veraschungsanlage eine Abgasleitung (6) zur Ableitung der Abgase aus der Wärmebehandlungskammer (1) auf. Auch diese Abgasleitung (6) ist im Inneren bevorzugt mit einer gegenüber Flusssäure resistenten feuerfesten Isolierauskleidung versehen.

Wärmebehandlungskammer (1), Abgasleitung (6) und die bevorzugt vorhandene Nachverbrennungskammer (2) und sind die Bestandteile der Veraschungsanlage, welche vom Abgas durchströmt werden, bevor dieses in den sauren und basischen Wäschern (3, 4, 5) von Fluorwasserstoffgas befreit wird. Sind sowohl die Wärmebehandlungskammer (1) als auch die Nachverbrennungskammer (2) und die Abgasleitung (6) mit einer gegenüber Flusssäure resistenten feuerfesten Isolierauskleidung versehen, erhöht sich die Lebensdauer der erfindungsgemäßen Veraschungsanlage, da diese Bestandteile nicht von der Flusssäure oder Fluorwasserstoffgas angegriffen werden können.

Bei der feuerfesten Isolierauskleidung der vorliegenden Erfindung kann es sich um eine Stampfmasse handeln. Diese weist bevorzugt ein Gehalt an Aluminiumoxid (Al₂O₃) von 85 Gew.-% oder mehr, insbesondere von 88 Gew.-% oder mehr auf. Diese Isolierauskleidung ist bei einer Arbeits- und Dauertemperatur von etwa 800 °C stabil. Sie verträgt jedoch auch Spitzentemperaturen bis etwa 2000 °C.

Neben Aluminiumoxid weisen Stampfmassen üblicherweise Siliziumdioxid (SiO₂) und/oder Kalziumoxid (CaO) auf. Diese Bestandteile finden sich auch in herkömmlichen feuerfesten Isolierauskleidungen. Diese werden von Flusssäure herausgelöst, wodurch die Isolierauskleidung zerstört wird.

Überraschender Weise hat sich nun gezeigt, dass ein Gehalt an Aluminiumoxid von 85 Gew.-% oder mehr, insbesondere von 88 Gew.-% oder mehr in einer Stampfmasse ausreicht, um eine Resistenz gegenüber Flusssäure aufzuweisen. Die erfindungsgemäßen Stampfmassen können neben Aluminiumoxid als weitere Bestandteile auch Kalziumoxid und Siliziumdioxid in unterschiedlichen Anteilen umfassen. Trotz des Anteils von bis zu 15 Gew.-%, insbesondere von bis zu 12 Gew.-% an Kalziumoxid und/oder Siliziumdioxid in der Stampfmasse wird diese von Flusssäure nicht angegriffen. Dabei ist der Gehalt von Kalziumoxid und/oder Siliziumdioxid oder deren Verhältnis zueinander nicht relevant. Zudem ist die entsprechende Stampfmasse gut verarbeitbar und passt sich problemlos der Innenwand der Wärmebehandlungskammer (1) und auch der Abgasleitung (6) und der Nachbehandlungskammer (2) an.

Erfindungsgemäß ist es dabei möglich, dass die Wärmebehandlungskammer (1), die Nachverbrennungskammer (2) und die Abgasleitung (6) dieselbe oder eine unterschiedliche Isolierauskleidung aufweisen.

Bevorzugt weisen die Wärmebehandlungskammer (1), die Nachverbrennungskammer (2) und/oder die Abgasleitung (6) weiterhin eine Außenisolierung auf. Die Außenisolierung kann mit im Stand der Technik bekannten Materialien erfolgen. Bevorzugt handelt es sich bei der Außenisolierung um eine Mineralfaser. Um die Außenisolierung herum befindet sich ein Stahlblech. Dieses fixiert die Außenisolierung an ihrer Position und dient der Stabilisierung und Formgebung der Bestandteile der Veraschungsanlage.

Ein Problem bei der Verbrennung von fluorhaltigen Produkten entstehenden Flusssäure ist, dass sie im Bereich der stützenden Stahlaußenmäntel zur Korrosion führt. Diffundiert Fluorwasserstoffgas HF durch Porositäten hinter die im Reaktionsraum befindliche temperaturresistente Isolierauskleidung, gelangt sie zu den außen liegenden, zum Teil tragenden Stahlkonstruktionen. Hier kann Fluorwasserstoffgas mit Wasser aus der Luft zu Flusssäure reagieren. Flusssäure bildet mit Wasser bei einer Konzentration von 38,2% HF ein azeotropes Gemisch, welches eine Siedetemperatur von 112 °C besitzt. Kondensiert nun die Flusssäure an den Stahlwänden, korrodieren diese.

Durch die Außenisolierung wird erreicht, dass die Temperatur am Stahlmantel, also der Stahlaußenwand der Anlagenteile nicht unter 120 °C absinkt. Die Stärke der Außenisolierung richtet sich dabei nach dem Temperaturprofil im Inneren des entsprechenden Bestandteils der Veraschungsanlage. Bei einer Temperatur von 120 °C kommt es nicht zur Kondensation der Fluorwasserstoffsäure. Sollte daher Fluorwasserstoffgas durch die feuerfeste Isolierauskleidung nach außen hin diffundieren, sind keine Korrosionsschäden an tragenden Stahlkonstruktionen zu erwarten.

Erfindungsgemäß kann die Stärke der Isolierung an Wärmebehandlungskammer (1), Abgasleitung (6) und Nachverbrennungskammer (2) unterschiedliche Stärken aufweisen. Es ist jedoch auch möglich, dass alle Bestandteile gleich stark isoliert sind. So können Wärmebehandlungskammer (1), Abgasleitung (6) und Nachverbrennungskammer (2) beispielsweise eine Außenisolierung aus einer Mineralfaser mit einer Stärke von etwa 10 cm aufweisen.

In einer bevorzugten Ausführungsform umfasst die Wärmebehandlungskammer (1) eine feuerfeste Isolierauskleidung im Inneren, welche zusammen mit der Wand der Kammer eine Stärke von etwa 30 cm aufweist, und eine Außenisolierung mit einer Stärke von etwa 10 cm.

Erfindungsgemäß weißt die Veraschungsanlage bevorzugt wenigstens einen doppelwandig aufgebauten Wäscher aus Graphit (3) auf. Dieser doppelwandige Wäscher (3) weist bevorzugt eine Kühlung insbesondere eine Wasserkühlung auf. Als Außenhaut kann der Wäscher (3) ein Stahlblech aufweisen. Zum Ein- und Ausleiten des Kühlmittels weist der doppelwandige Wäscher (3) Ventile auf.

Das Kühlmittel, beispielsweise Wasser, strömt zwischen der äußeren Graphitwand und der Außenhaut. Hierdurch findet indirekt über das Waschmedium und die Graphitwände eine Abfuhr der Wärme aus dem Abgas statt.

Als Kühlmittel hat sich Wasser als besonders geeignet herausgestellt. Dieses ist kostengünstig und einfach zu handhaben. Zudem bestehen bei einem eventuellen Kontakt mit den Abgasen keine Gefahren unerwünschter chemischer Reaktionen.

Die Dicke der Graphitwände liegt bevorzugt im Bereich von 3 cm bis 4 cm. Es hat sich gezeigt, dass diese Stärke ausreichend ist, um eine ausreichende Temperatur- und Säurestabilität zu erhalten.

In den doppelwandigen Wäscher (3) strömt Wasser als Waschmittel für das Abgas ein. Dieses reagiert mit Fluorwasserstoffgas HF im Abgas und wäscht dieses heraus. Das hierbei mit Fluorwasserstoffgas aufgesalzte Waschwasser wird gesammelt und entsorgt.

Neben der Säureresistenz weist Graphit auch eine hohe Temperaturresistenz auf. Die Abgase strömen aus der thermischen Nachverbrennungskammer (2) oder der Wärmebehandlungskammer (1) in einen sauren Wäscher. Diese Abgase weisen eine Temperatur von bis zu 1000 °C auf. Es hat sich gezeigt, dass Graphit hier eine ausreichende Temperaturbeständigkeit besitzt.

Bevorzugt weist das erfindungsgemäße Abgasreinigungssystem weiterhin wenigstens einen einwandigen Wäscher aus Graphit (4) auf. Auch dieser Wäscher weist als Außenhaut ein Stahlblech auf. Die Dicke der Graphitwand liegt bevorzugt im Bereich von 3 cm bis 4 cm.

In einer bevorzugten Ausführungsform weist das Abgasreinigungssystem einen doppelwandigen Wäscher aus Graphit (3) und einen einwandigen Wäscher aus Graphit (4) auf. Diese Ausführungsform ist in Figur 1 gezeigt. Beide sauren Wäscher (3, 4) besitzen in dieser bevorzugten Ausführungsform eine zylindrische Form mit einem Innendurchmesser von mehr als 1 m. Über die gesamte Höhe von etwa 4 m oder mehr kommt das Abgas in Kontakt mit dem Waschwasser und wird so gereinigt. Das Waschwasser strömt üblicherweise von oben in den Wäscher ein, so dass im oberen Bereich des Wäschers das Abgas mit Wasser gewaschen wird. Dieses reichert sich mit Fluorwasserstoffgas an, wodurch im unteren Bereich das Abgas mit einer Säure, nämlich Wasser mit einem Anteil an Flusssäure, gewaschen wird. Oben und unten beziehen sich dabei auf die räumliche Anordnung, wie sie auch in Fig. 1 dargestellt ist.

Im ersten doppelwandigen Wäscher (3) wird wenigstens ein Großteil an oder das gesamte Fluorwasserstoffgas mittels Wasser aus dem Abgas rausgewaschen. Zudem wird das Abgas abgekühlt. Im zweiten einwandigen Wäscher (4) wird eventuell noch vorhandenes Fluorwasserstoffgas aus dem Abgas gebunden. Eine weitere Abkühlung der Abgase ist nicht mehr notwendig.

Die Veraschungsanlage der vorliegenden Erfindung umfasst weiterhin einen basischen Wäscher (5). In diesem werden die Abgase aus dem wenigstens einen sauren Wäscher (3, 4) geleitet, nachdem sie weitestgehend oder vollständig von Fluorwasserstoffgas befreit wurden. Der basische Wäscher (5) kann im Inneren eine Beschichtung aufweisen, die gegenüber einem basischen Waschwasser und eventuell im Abgas noch vorhandenen Spuren von Fluorwasserstoffgas resistent ist. Insbesondere ist die Beschichtung gegenüber Basen mit einem pH Wert von wenigstens 10 oder mehr, insbesondere von wenigstens 11 oder mehr stabil. Bevorzugt weist der basische Wäscher (5) im Inneren eine Beschichtung aus einem Kunststoff, insbesondere aus Polypropylen auf. Die Außenhaut des basischen Wäschers kann aus Stahl bestehen.

Eine Kunststoffbeschichtung hat sich als gut handhabbar erwiesen. Die Auskleidung erfolgt homogen und ohne die Gefahr einer Rissbildung. Zudem sind Kunststoffe, insbesondere Polypropylen, resistent gegenüber basischem Waschwasser, welches in dieser Waschstufe eingesetzt wird. Sollten in diese Stufe noch Reste an HF im Abgas vorhanden sein, so wird die Beschichtung hierdurch nicht angegriffen.

Das in den basischen Wäscher (5) geleitete Abgas ist weitestgehend von Fluorwasserstoffgas befreit. Es ist jedoch nicht auszuschließen, dass noch Spuren von Fluorwasserstoffgas vorhanden sind. Würde man nun den basischen Wäscher (5) mit sonst üblichen Glasfaserverstärkten Kunststoffen (GFK) auskleiden, würden diese Reste an Fluorwasserstoffgas ausreichen, um die Glasfasern aus dem Kunststoff anzugreifen und wegzuätzen. Die Innenverkleidung müsste dann bereits nach kurzer Zeit erneuert werden.

Die erfindungsgemäße Veraschungsanlage kann weiterhin eine Steuerungsanlage umfassen. Die Steuerungsanlage reguliert die je nach Material bei der Wärmebehandlung benötigten Temperaturprofile und regelt die Abluftstrecke in Abhängigkeit von Unterdruck, Temperatur und Sauerstoffgehalt im Abgas. Grundsätzlich ist ein kontinuierlicher und ein diskontinuierlicher Betrieb möglich. Bevorzugt ist ein diskontinuierlicher Betrieb.

In einer weiteren Ausführungsform umfasst die vorliegende Erfindung ein Verfahren zur Anreicherung von Edelmetallen aus fluorhaltigen Materialien, umfassend eine Wärmebehandlung der Materialien in einer Wärmebehandlungskammer (1) mit einer gegenüber Flusssäure resistenten feuerfestigen Isolierauskleidung und eine Reinigung der bei der Wärmebehandlung entstehenden Abgase, wobei die Reinigung die folgenden Schritte in dieser Reihenfolge umfasst:
a) gegebenenfalls thermische Nachverbrennung in einer Nachverbrennungskammer (2),
b) Waschen der Abgase mit Wasser und/oder einer Säure und
c) Waschen der Abgase mit einer Lauge.

Bei der Wärmebehandlung der edelmetall- und fluorhaltigen Materialien entsteht eine edelmetallhaltige Asche. Diese wird nach im Stand der Technik bekannten Verfahren nasschemisch aufgearbeitet, um die darin enthaltenen Edelmetalle zurück zu gewinnen. Edelmetalle im Sinne der vorliegenden Erfindung sind Gold, Silber sowie die Platingruppenmetalle.

Die Wärmebehandlung findet üblicherweise bei einer Temperatur bis zu 800 °C statt. Es können kurzfristig Spitzentemperaturen von bis zu etwa 2000 °C auftreten. Nachdem die Materialien in die Wärmebehandlungskammer (1) eingebracht werden, wird die Temperatur langsam bis zu einer Temperatur von etwa 600 °C bis 800 °C erhöht. Die Temperatur ist abhängig von den zu verarbeitenden Materialien.

Die bei der Wärmebehandlung entstehenden Abgase werden gegebenenfalls zunächst einer thermischen Nachverbrennung in einer Nachverbrennungskammer (2) unterzogen. Anschließend werden die Abgase in einem sauren Wäscher mit Wasser oder einer Säure gewaschen. Erfindungsgemäß wird als Waschmittel Wasser eingesetzt. Dieses wäscht Fluorwasserstoffgas aus dem Abgas raus. Hierdurch entsteht eine Säure, die weiteres Fluorwasserstoffgas auswäscht, so dass über den gesamten Waschvorgang gesehen sowohl Wasser als auch eine Säure die Abgase waschen.

Das Waschwasser kann dabei Raumtemperatur aufweisen. Es ist jedoch auch möglich, dass das Waschwasser eine gegenüber Raumtemperatur leicht erhöhte Temperatur aufweist. Dabei sollte die Temperatur nicht mehr als 10 bis 20 °C über der Umgebungstemperatur liegen.

Das bei der Waschung in Schritt b) aufgesalzte Waschwasser kann periodisch oder kontinuierlich als Seitenstrom einer Abwasserbehandlungsanlage zugeführt werden.

Bevorzugt umfasst das Waschen der Abgase mit Wasser und/oder einer Säure zwei Schritte, nämlich
b1) Waschen und gleichzeitiges Abkühlen der Abgase in einem doppelwandigen Graphit Wäscher (3) und anschließendes
b2) Waschen der Abgase in einem einwandigen Graphit Wäscher (4).

In dem doppelwandigen Graphitwäscher (3) wird bevorzugt mittels einer Kühlung, insbesondere einer Wasserkühlung, das Abgas herabgekühlt. Wird Wasser als Kühlmittel verwendet, weist dies bevorzugt eine Temperatur von etwa 60 °C auf.

Im Inneren des doppelwandigen Wäschers (3) wird mit Hilfe von eingeleitetem Wasser das Abgas von Fluorwasserstoffgas gereinigt.

Um sicher zu stellen, dass das Fluorwasserstoffgas möglichst vollständig aus dem Abgas entfernt wird, wird das Abgas in einer bevorzugten Ausführungsform zwei Mal mit Wasser und/oder einer Säure gewaschen und hierfür aus dem ersten doppelwandigen Graphitwäscher (3) in einen zweiten einwandigen Graphitwäscher (4) geleitet. In beiden Wäschern (3, 4) wird das Abgas mit Wasser und/oder einer Säure gewaschen. In beiden Waschstufen wird zunächst Wasser als Waschmittel eingesetzt. Dieses säuert sich durch das aus dem Abgas ausgewaschene Fluorwasserstoffgas an, so dass in Summe sowohl Wasser als auch eine Säure in den jeweiligen Stufen das Abgas waschen. Sollte in der ersten Stufe das Fluorwasserstoffgas bereits vollständig aus dem Abgas entfernt worden sein, findet in der zweiten Stufe nur eine Reinigung mit Wasser statt.

Im Waschschritt c) wird das Abgas neutralisiert und saure Komponenten, die aus Schritt b) herrühren, entfernt. Als Lauge kann hier eine Lauge mit einem pH-Wert von wenigstens 10 oder mehr, insbesondere von wenigstens 11 oder mehr eingesetzt werden. Bevorzugt wird Natronlauge zum Waschen der Abgase in Schritt c) verwendet. Natronlauge geht mit den Bestandteilen der Abgase keine unerwünschte Reaktion ein. Zudem ist sie preisgünstig und gut handhabbar.

Das erfindungsgemäße Verfahren eignet sich bevorzugt zur Verarbeitung solcher Materialien, die einen Fluorgehalt bis zu 5 Gew.-% aufweisen. Bevorzugt setzt man als Materialien, die der Wärmebehandlung ausgesetzt werden, fluororganische Materialien, PTFE-Folien, Brennstoffzellen, Katalysatoren und/oder Pasten ein. Grundsätzlich eignet sich das Verfahren für alle Materialien mit einem Fluorgehalt bis zu 5 Gew.-%, welche sich bei einer Temperatur von etwa 800 °C, insbesondere von etwa 600 °C zersetzen.

Bevorzugt wird das erfindungsgemäße Verfahren in einer zuvor beschriebenen Veraschungsanlage durchgeführt. Die erfindungsgemäße Veraschungsanlage eignet sich zur Verwendung und zur Durchführung des erfindungsgemäßen Verfahrens.

### Bezugszeichenliste

- 1: Wärmebehandlungskammer
- 2: Nachverbrennungskammer
- 3: doppelwandiger Graphit Wäscher
- 4: einwandiger Graphitwäscher
- 5: basischer Wäscher
- 6: Abgasleitung

## Patentansprüche

1. Veraschungsanlage zur Anreicherung von Edelmetallen aus Fluor-haltigen Materialien umfassend
eine Wärmebehandlungskammer (1) mit einer feuerfesten Isolierauskleidung im Inneren der Wärmebehandlungskammer (1) und
ein Abgasreinigungssystem,
wobei die Isolierauskleidung gegenüber Flusssäure resistent ist und
das Abgasreinigungssystem wenigstens einen oder mehrere saure Wäscher (3, 4) und wenigstens einen basischen Wäscher (5) aufweist.

2. Veraschungsanlage nach Anspruch 1, **dadurch gekennzeichnet, dass** das Abgasreinigungssystem weiterhin wenigstens eine oder mehrere thermische Nachverbrennungskammer (2) umfasst.

3. Veraschungsanlage nach Anspruch 2, **dadurch gekennzeichnet, dass** die wenigstens eine thermische Nachverbrennungskammer (2) im Inneren mit einer gegenüber Flusssäure resistenten feuerfesten Isolierauskleidung versehen ist.

4. Veraschungsanlage nach einem oder mehreren der Ansprüche 1 bis 3, **dadurch gekennzeichnet, dass** sie weiterhin eine Abgasleitung (6) zur Ableitung der Abgase aus der Wärmebehandlungskammer (1) aufweist und diese Abgasleitung (6) im Inneren mit einer gegenüber Flusssäure resistenten feuerfesten Isolierauskleidung versehen ist.

5. Veraschungsanlage nach einem oder mehreren der Ansprüche 1 bis 4, **dadurch gekennzeichnet, dass** die feuerfeste Isolierauskleidung einen Gehalt an Aluminiumoxid (Al₂O₃) von 85 Gew-% oder mehr, insbesondere von 88 Gew.-% oder mehr aufweist.

6. Veraschungsanlage nach einem oder mehreren der Ansprüche 1 bis 5, **dadurch gekennzeichnet, dass** Wärmebehandlungskammer (1), Nachverbrennungskammer (2) und Abgasleitung (6) dieselbe oder eine unterschiedliche Isolierauskleidungen aufweisen.

7. Veraschungsanlage nach einem oder mehreren der Ansprüche 1 bis 6, **dadurch gekennzeichnet, dass** Wärmebehandlungskammer (1), Nachverbrennungskammer (2) und/oder Abgasleitung (6) weiterhin eine Außenisolierung aufweisen.

8. Veraschungsanlage nach Anspruch 7, **dadurch gekennzeichnet, dass** die Außenisolierung eine Mineralfaser umfasst.

9. Veraschungsanlage nach einem oder mehreren der Ansprüche 1 bis 8, **dadurch gekennzeichnet, dass** das Abgasreinigungssystem wenigstens einen doppelwandig aufgebauten Wäscher aus Graphit (3) aufweist.

10. Veraschungsanlage nach Anspruch 9, **dadurch gekennzeichnet, dass** der doppelwandige Wäscher (3) eine Wasserkühlung aufweist.

11. Veraschungsanlage nach einem oder mehreren der Ansprüche 1 bis 10, **dadurch gekennzeichnet, dass** das Abgasreinigungssystem wenigstens einen einwandigen Wäscher aus Graphit (4) aufweist.

12. Veraschungsanlage nach einem oder mehreren der Ansprüche 1 bis 11, **dadurch gekennzeichnet, dass** das Abgasreinigungssystem einen doppelwandigen Wäscher aus Graphit (3) und einen einwandigen Wäscher aus Graphit (4) aufweist.

13. Veraschungsanlage nach einem oder mehreren der Ansprüche 1 bis 12, **dadurch gekennzeichnet, dass** der basische Wäscher (5) im Inneren eine Beschichtung aus einem Kunststoff, insbesondere aus Polypropylen aufweist.

14. Veraschungsanlage nach einem oder mehreren der Ansprüche 1 bis 13 weiterhin umfassend eine Steuerungsanlage.

15. Verfahren zur Anreicherung von Edelmetallen aus Fluor-haltigen Materialien umfassend
eine Wärmebehandlung der Materialien in einer Wärmebehandlungskammer (1) mit einer gegenüber Flusssäure resistenten feuerfesten Isolierauskleidung und
eine Reinigung der bei der Wärmebehandlung entstehenden Abgase, wobei die Reinigung die folgenden Schritte in dieser Reihenfolge umfasst:
a) gegebenenfalls thermische Nachverbrennung in einer Nachverbrennungskammer (2),
b) Waschen der Abgase mit Wasser und/oder einer Säure und
c) Waschen der Abgase mit einer Lauge.

16. Verfahren nach Anspruch 15, **dadurch gekennzeichnet, dass** Schritt b) folgende Schritte umfasst:
b1) Waschen und gleichzeitiges Abkühlen der Abgase in einem doppelwandigen Graphit Wäscher (3) und anschließendes
b2) Waschen der Abgase in einem einwandigen Graphit Wäscher (4).

17. Verfahren nach Anspruch 15 oder 16, **dadurch gekennzeichnet, dass** man das aufgesalzte Waschwasser aus Schritt b) periodisch oder kontinuierlich als Seitenstrom einer Abwasserbehandlungsanlage zuführt.

18. Verfahren nach einem oder mehreren der Ansprüche 15 bis 17, **dadurch gekennzeichnet, dass** man die Abgase in Schritt c) mit einer Lauge mit einem pH Wert von wenigstens 10 oder mehr, insbesondere von wenigstens 11 oder mehr wäscht.

19. Verfahren nach einem oder mehreren der Ansprüche 15 bis 18, **dadurch gekennzeichnet, dass** man als Materialien, die der Wärmebehandlung ausgesetzt werden, solche mit einer Fluor-Gehalt bis zu 5 Gew.-% einsetzt.

20. Verfahren nach einem oder mehreren der Ansprüche 15 bis 19, **dadurch gekennzeichnet, dass** man als Materialien, die der Wärmebehandlung ausgesetzt werden, fluororganische Materialien, PTFE-Folien, Brennstoffzellen, Katalysatoren und/oder Pasten einsetzt.

21. Verfahren nach einem oder mehreren der Ansprüche 15 bis 20, **dadurch gekennzeichnet, dass** man das Verfahren in einer Veraschungsanlage nach einem oder mehreren der Ansprüche 1 bis 13 durchführt.

22. Verwendung der Veraschungsanlage nach einem oder mehreren der Ansprüche 1 bis 14 zur Durchführung des Verfahrens nach einem oder mehreren der Ansprüche 15 bis 20.

23. Verwendung der Veraschungsanlage nach einem oder mehreren der Ansprüche 1 bis 14 zur Veraschung von Materialien mit einem Fluor Gehalt von bis zu 5 Gew.-%.

24. Verwendung der Veraschungsanlage nach einem oder mehreren der Ansprüche 1 bis 14 zur Veraschung von fluororganischen Materialien, PTFE-Folien, Herbizide, Brennstoffzellen, Katalysatoren und/oder Pasten.

## Claims

1. Ashing plant for enriching noble metals from fluorine-containing materials, comprising
a thermal treatment chamber (1) having a refractory insulating lining on the inside of the thermal treatment chamber (1), and
an exhaust gas cleaning system,
whereby the insulating lining is resistant to hydrofluoric acid and
the exhaust gas cleaning system comprises at least one or more acid scrubber(s) (3, 4) and at least one alkaline scrubber (5).

2. Ashing plant according to claim 1, **characterised in that** the exhaust gas cleaning system further comprises at least one or more thermal after-incineration chambers (2).

3. Ashing plant according to claim 2, **characterised in that** the inside of the at least one thermal after-incineration chamber (2) is provided with a hydrofluoric acid-resistant refractory insulating lining.

4. Ashing plant according to one or more of the claims 1 to 3, **characterised in that** it further comprises an exhaust gas conduit (6) for guiding the exhaust gases out of the thermal treatment chamber (1) and **in that** the inside of said exhaust gas conduit (6) is provided with a hydrofluoric acid-resistant refractory insulating lining.

5. Ashing plant according to one or more of the claims 1 to 4, **characterised in that** the refractory insulating lining has an aluminium oxide (Al₂O₃) content of 85 % by weight or more, in particular of 88 % by weight or more.

6. Ashing plant according to one or more of the claims 1 to 5, **characterised in that** thermal treatment chamber (1), after-incineration chamber (2), and exhaust gas conduit (6) comprise the same or different insulating lining(s).

7. Ashing plant according to one or more of the claims 1 to 6, **characterised in that** thermal treatment chamber (1), after-incineration chamber (2) and/or exhaust gas conduit (6) further comprise an external lining.

8. Ashing plant according to claim 7, **characterised in that** the external lining is a mineral fibre.

9. Ashing plant according to one or more of the claims 1 to 8, **characterised in that** the exhaust gas cleaning system comprises at least one scrubber made of graphite (3) with a double-walled design.

10. Ashing plant according to claim 9, **characterised in that** the double-walled scrubber (3) comprises a water cooling system.

11. Ashing plant according to one or more of the claims 1 to 10, **characterised in that** the exhaust gas cleaning system comprises at least one single-walled scrubber (4) made of graphite.

12. Ashing plant according to one or more of the claims 1 to 11, **characterised in that** the exhaust gas cleaning system comprises a double-walled scrubber made of graphite (3) and a single-walled scrubber made of graphite (4).

13. Ashing plant according to one or more of the claims 1 to 12, **characterised in that** the alkaline scrubber (5) comprises on its inside a coating made of a plastic material, in particular made of polypropylene.

14. Ashing plant according to one or more of the claims 1 to 13, further comprising a control unit.

15. Method for enriching noble metals from fluorine-containing materials, comprising
a thermal treatment of the materials in a thermal treatment chamber (1) having a hydrofluoric acid-resistant refractory insulating lining, and
a cleaning of the exhaust gases generated during the thermal treatment, whereby the cleaning comprises the following steps in the following order:
a) if applicable, thermal after-incineration in an after-incineration chamber (2),
b) scrubbing of the exhaust gases with water and/or an acid, and
c) scrubbing of the exhaust gases with a base.

16. Method according to claim 15, **characterised in that** step b) comprises the following steps:
b1) scrubbing and simultaneous cooling of the exhaust gases in a double-walled graphite scrubber (3) followed by
b2) scrubbing of the exhaust gases in a single-walled graphite scrubber (4).

17. Method according to claim 15 or 16, **characterised in that** the salt-enriched scrubbing water obtained in step b) can be fed to a waste water treatment plant periodically or continuously as side stream.

18. Method according to one or more of the claims 15 to 17, **characterised in that** the exhaust gases are washed in step c) with a base with a pH of at least 10 or more, in particular of at least 11 or more.

19. Method according to one or more of the claims 15 to 18, **characterised in that** materials having a fluorine content of up to 5 % by weight are used as materials to be subjected to the thermal treatment.

20. Method according to one or more of the claims 15 to 19, **characterised in that** fluoro-organic materials, PTFE films, fuel cells, catalysts and/or pastes are used as materials to be subjected to the thermal treatment.

21. Method according to one or more of the claims 15 to 20, **characterised in that** the method is implemented in an ashing plant according to one or more of the claims 1 to 13.

22. Use of the ashing plant according to one or more of the claims 1 to 14 for implementing the method according to one or more of the claims 15 to 20.

23. Use of the ashing plant according to one or more of the claims 1 to 14 for ashing materials with a fluorine content of up to 5 % by weight.

24. Use of the ashing plant according to one or more of the claims 1 to 14 for ashing fluoro-organic materials, PTFE films, herbicides, fuel cells, catalysts and/or pastes.

## Revendications

1. Installation d'incinération destinée à l'enrichissement de métaux nobles de matériaux contenant du fluor, comprenant
une chambre de traitement thermique (1) comprenant un revêtement isolant résistant au feu à l'intérieur de la chambre de traitement thermique (1) et un système de nettoyage des gaz résiduels,
dans lequel le revêtement isolant est résistant à l'acide fluorhydrique et le système de nettoyage des gaz résiduels présente au moins un ou plusieurs laveurs acides (3, 4) et au moins un laveur basique (5).

2. Installation d'incinération selon la revendication 1, **caractérisée en ce que** le système de nettoyage des gaz résiduels comprend en outre au moins une ou plusieurs chambres de post-combustion thermique (2).

3. Installation d'incinération selon la revendication 2, **caractérisée en ce que** l'intérieur de l'au moins une chambre de post-combustion thermique (2) est doté d'un revêtement isolant résistant au feu et à l'acide fluorhydrique.

4. Installation d'incinération selon l'une ou plusieurs des revendications 1 à 3, **caractérisée en ce qu'**elle comprend en outre une ligne de gaz résiduels (6) pour évacuer les gaz résiduels de la chambre de traitement thermique (1) et l'intérieur de cette ligne de gaz résiduels (6) est doté d'un revêtement isolant résistant au feu et à l'acide fluorhydrique.

5. Installation d'incinération selon l'une ou plusieurs des revendications 1 à 4, **caractérisée en ce que** le revêtement isolant résistant au feu présente une teneur en oxyde d'aluminium (Al₂O₃) de 85 % en poids ou plus, en particulier de 88 % en poids ou plus.

6. Installation d'incinération selon l'une ou plusieurs des revendications 1 à 5, **caractérisée en ce que** la chambre de traitement thermique (1), la chambre de post-combustion thermique (2) et la ligne de gaz résiduels (6) présentent le même revêtement isolant ou un revêtement isolant différent.

7. Installation d'incinération selon l'une ou plusieurs des revendications 1 à 6, **caractérisée en ce que** la chambre de traitement thermique (1), la chambre de post-combustion thermique (2) et/ou la ligne de gaz résiduels (6) présentent en outre une isolation extérieure.

8. Installation d'incinération selon la revendication 7, **caractérisée en ce que** l'isolation extérieure comprend une fibre minérale.

9. Installation d'incinération selon l'une ou plusieurs des revendications 1 à 8, **caractérisée en ce que** le système de nettoyage des gaz résiduels présente au moins un laveur en graphite (3) à double paroi.

10. Installation d'incinération selon la revendication 9, **caractérisée en ce que** le laveur à double paroi (3) présente un refroidissement à l'eau.

11. Installation d'incinération selon l'une ou plusieurs des revendications 1 à 10, **caractérisée en ce que** le système de nettoyage des gaz résiduels présente au moins un laveur en graphite (4) à paroi simple.

12. Installation d'incinération selon l'une ou plusieurs des revendications 1 à 11, **caractérisée en ce que** le système de nettoyage des gaz résiduels présente un laveur en graphite (3) à double paroi et un laveur en graphite (4) à paroi simple.

13. Installation d'incinération selon l'une ou plusieurs des revendications 1 à 12, **caractérisée en ce que** l'intérieur du laveur basique (5) présente un revêtement en plastique, en particulier en polypropylène.

14. Installation d'incinération selon l'une ou plusieurs des revendications 1 à 13, comprenant en outre une installation de commande.

15. Procédé destiné à l'enrichissement de métaux nobles en matériaux contenant du fluor, comprenant
un traitement thermique des matériaux dans une chambre de traitement thermique (1) comprenant un revêtement isolant résistant au feu et à l'acide fluorhydrique et
un nettoyage des gaz résiduels produits par le traitement thermique, sachant que le nettoyage comprend les étapes suivantes dans cet ordre :
a) le cas échéant, post-combustion thermique dans une chambre de post-combustion (2),
b) lavage des gaz résiduels à l'eau et/ou avec un acide et
c) lavage des gaz résiduels avec une lessive alcaline.

16. Procédé selon la revendication 15, **caractérisé en ce que** l'étape b) comprend les étapes suivantes :
b1) lavage et refroidissement simultané des gaz résiduels dans un laveur en graphite (3) à double paroi puis
b2) lavage des gaz résiduels dans un laveur en graphite (4) à paroi simple.

17. Procédé selon la revendication 15 ou 16, **caractérisé en ce que** l'eau de lavage salée de l'étape b) est amenée de façon périodique ou continue en tant qu'écoulement secondaire vers une installation de traitement des eaux usées.

18. Procédé d'enrichissement selon l'une ou plusieurs des revendications 15 à 17, **caractérisé en ce que** les gaz résiduels à l'étape c) sont lavés avec une lessive alcaline ayant une valeur de pH inférieure à 10 ou plus, en particulier d'au moins 11 ou plus.

19. Procédé d'enrichissement selon l'une ou plusieurs des revendications 15 à 18, **caractérisé en ce que** sont employés comme matériaux qui sont soumis au traitement thermique, ceux qui ont une teneur en fluor allant jusqu'à 5% en poids.

20. Procédé d'enrichissement selon l'une ou plusieurs des revendications 15 à 19, **caractérisé en ce que** sont employés comme matériaux qui sont soumis au traitement thermique, des matériaux fluororganiques, des films en PTFE, des piles à combustible, des catalyseurs et/ou des pâtes.

21. Procédé d'enrichissement selon l'une ou plusieurs des revendications 15 à 20, **caractérisé en ce que** le procédé est exécuté dans une installation d'incinération selon l'une ou plusieurs des revendications 1 à 13.

22. Emploi de l'installation d'incinération selon l'une ou plusieurs des revendications 1 à 14 pour exécuter le procédé selon l'une ou plusieurs des revendications 15 à 20.

23. Emploi de l'installation d'incinération selon l'une ou plusieurs des revendications 1 à 14 pour incinérer des matériaux ayant une teneur en fluor allant jusqu'à 5% en poids.

24. Emploi de l'installation d'incinération selon l'une ou plusieurs des revendications 1 à 14 pour incinérer des matériaux fluororganiques, des films en PTFE , des herbicides, des piles à combustible, des catalyseurs et/ou des pâtes.
